# FASCICULE DE BREVET EUROPEEN

(11) **EP 1 051 642 B1**
(45) Date de publication et mention de la délivrance du brevet: **28.09.2005**
(21) Numéro de dépôt: 99901630.6
(22) Date de dépôt: 26.01.1999
(51) Int. Cl.: G01T 1/20, H01J 29/38

(54) **CAPTEUR ELECTRONIQUE MATRICIEL PHOTOSENSIBLE**
ELEKTRONISCHER DETEKTOR MIT LICHTEMPFINDLICHER MATRIX
PHOTOSENSITIVE MATRIX ELECTRONIC SENSOR

(30) Priorité: 27.01.1998 FR 9800850
(43) Date de publication de la demande: 15.11.2000
(73) Titulaire: Atmel Grenoble S.A., 38120 Saint-Egrève (FR)
(72) Inventeur: LAUGIER, Roger, Thomson-CSF Prop. Intellectuelle, F-94117 Arcueil Cedex (FR)
(74) Mandataire: Guérin, Michel
(86) Numéro de dépôt international: PCT/FR1999/000149
(87) Numéro de publication internationale: WO 1999/038031

(56) Documents cités:
- EP-A- 0 403 802
- FR-A- 2 301 088
- FR-A- 2 713 824

## Description

La présente invention concerne un capteur électronique matriciel photosensible. Elle concerne plus particulièrement les capteurs de rayonnements X. Elle a pour objet d'améliorer les performances de ce type de capteurs.

On connaît, dans le domaine des capteurs électroniques de rayonnements X, les écrans intensificateurs d'image radiologique disposés en regard d'un détecteur et recevant sur une autre face un rayonnement X. On connaît également dans le domaine de la médecine nucléaire des scintillateurs pour transformer des rayonnements gamma (ou des rayonnements X) en des rayonnements visibles détectables par un détecteur. Les détecteurs les plus communément utilisés sont, dans le domaine de la radiologie, des caméras avec cible ou des barrettes assemblées de dispositifs à transfert de charge (CCD). Dans le domaine de la médecine nucléaire, on utilise également des arrangements de tubes photomultiplicateurs reliés par ailleurs à un circuit électronique de barycentration. Tous ces capteurs avec des détecteurs incapables de détecter directement des rayonnements X sont associés à des scintillateurs chargés de transformer les rayonnements X en des rayonnements dans le spectre approximativement visible.

Le matériau utilisé pour effectuer la transformation, le matériau du scintillateur, est normalement de l'oxysulfure de gadolinium. Celui-ci est utilisé sous forme d'un dépôt mince, typiquement de 50 à 300 micromètres. Ce dépôt est constitué de particules de ce matériau assemblées par un liant. L'émission de lumière visible dans toute l'épaisseur, et toutes les directions, de ce matériau entraîne une perte de sensibilité et une perte de pouvoir résolvant du détecteur, et donc du capteur.

On a donc déjà proposé de déposer un film (plastique) contenant de l'oxysulfure de gadolinium sur un détecteur matriciel d'image lumineuse, ce dernier étant constitué par un circuit-intégré au silicium.

L'iodure de césium, Csl, dopé au thallium, en aiguillettes, offre une alternative intéressante pour un rendement lumineux supérieur associé à un effet de guide d'onde des aiguillettes dont les dimensions typiques des sections vont de 3 à 6 micromètres. Ce matériau est classiquement utilisé dans les intensificateurs d'image radiologique, en revêtement d'un écran d'entrée qui est en général constitué par une feuille d'aluminium bombé. On connaît aussi des réalisations dans lesquelles une galette de fibres optiques est recouverte par un tel matériau. Les aiguillettes sont orientées perpendiculairement à la surface du support qui les porte. Elles ne sont jointes que partiellement les unes aux autres. Elles offrent ainsi une porosité de 20 à 25%. Ces pores remplis d'air, associés à l'indice de réfraction favorable du Csl (1,78) apportent une canalisation des photons visibles émis dans chaque aiguillette et donnent une sensibilité et un pouvoir résolvant plus élevés.

Cependant des difficultés d'utilisation du Csl, par rapport à l'oxysulfure de gadolinium subsistent. On connaît notamment l'inconvénient que le Csl s'hydrate rapidement à l'air ambiant aux humidités habituelles. Cette prise d'eau a pour effet de dégrader l'image obtenue avec le capteur. Elle provoque un effet de halo dans un premier temps. Puis cette humidification dégrade de manière irréversible les aiguillettes avec une perte conséquente de rendement lumineux et de pouvoir résolvant du capteur. A noter que cet inconvénient ne se rencontre pas dans les tubes intensificateurs d'image radiologique puisque le Csl est dans le tube à vide.

D'autre part le thallium, bien que présent en faibles quantités dans les aiguillettes, est fortement toxique. La faible tenue mécanique du Csl provoque alors des poussières et des déchets dont l'élimination doit être scrupuleusement contrôlée. Dans certains cas, la passivation du Csl dopé au thallium est obtenue par vaporisation d'une couche d'aluminium à la surface du scintillateur.

À cause de sa faible tenue mécanique, le Csl doit être déposé sur un support rigide. La flexion du support entraînerait en effet des défauts visibles à l'image. Ce support doit par ailleurs normalement subir, sans se déformer, un traitement thermique de diffusion du thallium à une température de l'ordre de 300°.

Dans les intensificateurs d'image radiologiques, le support est en aluminium, parfois associé à du carbone amorphe, ou même remplacé par du carbone amorphe en raison de la résistance très élevée de ce matériau. Le document FR A 2 713 824 décrit un tube dans lequel le carbone est utilisé sous forme amorphe ; il ne s'agit pas d'un capteur matriciel.

En dehors des réalisations de tubes intensificateurs d'image, la demanderesse a envisagé de déposer l'iodure de césium sur du béryllium. Cependant ce matériau présente l'inconvénient d'être excessivement onéreux.

L'invention a pour objet de résoudre ces problèmes en préconisant de faire croître une couche de lsI sur un socle constitué par un bloc de graphite usiné, ayant de préférence la particularité de présenter une rugosité de surface faible. De préférence dans l'invention le graphite utilisé est un socle ayant subi, à sa surface, une étape de densification pour en éliminer les porosités naturelles liées au graphite. Par ailleurs cette couche ainsi rendue plus dense est de préférence ensuite rectifiée pour lui donner une rugosité faible. On a alors pu constater que, déposé en phase gazeuse, le Csl adopte une croissance tout à fait intéressante : les aiguillettes sont régulièrement espacées et la surface du scintillateur ainsi réalisée est quasiment plane malgré les défauts liés à la rugosité du graphite.

Si on ne fait pas subir au socle l'opération de densification, il résulte dans le capteur réalisé des différences de sensibilité. On peut tenter de s'en arranger. Par exemple, si la surface de graphite est striée (par exemple par des traits parallèles) on reconnaît dans l'image obtenue après fonctionnement du capteur la présence de ces stries. II est possible, notamment dans le domaine de la médecine nucléaire, de corriger par un traitement logiciel les différences de sensibilité relatives aux différents endroits. Dans un perfectionnement selon l'invention, on limite l'importance de cette correction par l'opération de densification et/ou l'opération de rectification.

Dans tous les cas, la présence du socle en graphite apporte la solution aux problèmes de dilatation différentielle se produisant lors de la diffusion du thallium.

Le graphite, tel que compris dans la présente invention, est un matériau différent du carbone amorphe en ce sens qu'il a une structure physique poreuse, au contraire du carbone amorphe qui est très dense. Le graphite est usinable avec des outils métalliques, alors que le carbone amorphe est usinable pratiquement seulement avec des outils diamantés.

C'est pourquoi, dans l'application envisagée ici, qui est le dépôt d'iodure de césium sur un support usiné destiné à être placé devant un détecteur d'image matriciel, il s'avère particulièrement intéressant d'utiliser un bloc de graphite comme support.

Le graphite a le plus souvent une structure non seulement poreuse mais lamellaire, qui facilite encore plus son usinage, au contraire du carbone amorphe, dont la structure est essentiellement isotrope.

Le graphite est obtenu en principe par compression de poudre de carbone à haute température, alors que le carbone amorphe résulte de la décomposition en phase gazeuse (craquage) aboutissant à une croissance de revêtements plus ou moins épais sur un support de départ. Il est donc plus facile de réaliser des blocs usinables à partir de graphite, alors qu'il paraît plus facile de réaliser des revêtements de carbone amorphe sur des surfaces telles que les surfaces bombées d'écrans d'entrée d'intensificateurs d'image radiologique.

L'invention a donc pour objet un capteur électronique matriciel photosensible comportant un détecteur d'image matriciel surmonté d'un scintillateur pour transformer un rayonnement électromagnétique haute fréquence, typiquement un rayonnement X, en un rayonnement basse fréquence, typiquement un rayonnement du domaine visible, caractérisé en ce que le scintillateur comporte une dalle en iodure de césium portée par un socle en graphite disposé du coté où le rayonnement haute fréquence est reçu.

Elle a également pour objet un procédé de fabrication d'un capteur, caractérisé en ce que
- on réalise un socle en graphite devant servir de support à un scintillateur,
- on rectifie le socle de graphite,
- on dépose en phase gazeuse de l'iodure de césium sur le socle en graphite,
- on dope le dépôt d'iodure de césium au thallium,
- on dépose en phase gazeuse sous vide une couche en une résine de synthèse sur le dépôt d'iodure de césium,
- on dépose une couche résine de couplage optique liquide sur la couche en résine de synthèse,
- on plaque un détecteur contre la couche de résine de couplage optique liquide.

L'invention sera mieux comprise à la lecture de la description qui suit et à l'examen des figures qui l'accompagnent. Celles-ci ne sont données qu'à titre indicatif et nullement limitatif de l'invention. Les figures montrent :
- figure 1 : la représentation schématique de la structure du capteur selon l'invention ;
- figure 2 : une représentation schématique d'une machine utilisée pour mettre en oeuvre un procédé de passivation de la couche d'iodure de césium.

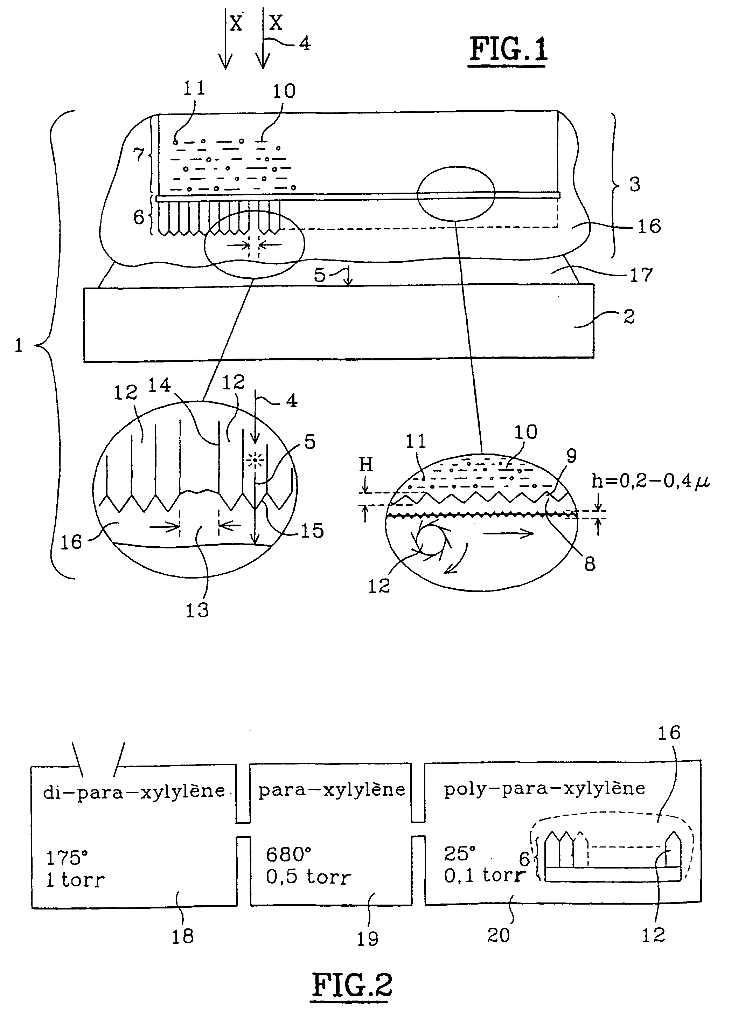

La figure 1 montre, selon l'invention, un capteur 1 électronique photosensible matriciel. Le capteur 1 comporte un détecteur 2 surmonté d'un scintillateur 3. Le but de ce capteur est de transformer un rayonnement X 4 ou un autre rayonnement haute fréquence (qui pourraient également être un rayonnement gamma) en un rayonnement basse fréquence 5. Le rayonnement 5 peut ainsi être émis dans le spectre visible. Le rayonnement 5 est alors détectable par un détecteur 2. Le détecteur 2 peut être un détecteur classique. Dans un exemple préféré, le détecteur 2 est du type CCD, comme indiqué ci-dessus. Chaque barrette de dispositif CCD forme une ligne de points de détection. Des barrettes accolées servent à former les différentes lignes d'une image matricielle.

Le capteur comporte essentiellement une dalle 6 en iodure de césium portée par un socle 7 en graphite. Le socle est disposé du coté où le rayonnement X est reçu. Le graphite utilisé selon l'invention est de préférence du graphite à structure lamellaire obtenu par compression de poudre de carbone à chaud. Ce type de graphite est peu coûteux à réaliser, et surtout peu coûteux à usiner car il peut être usiné avec des outils métalliques, alors que les structures de matériaux à base de carbone amorphe ne peuvent être usinées qu'avec des outils diamantés.

Le matériau utilisé se présente donc sous la forme de petites lamelles 10 agglomérées, empilées bout à bout et au-dessus les unes des autres. L'épaisseur du socle 7, dans un exemple est de l'ordre de 500 micromètres. Dans le cas où le scintillateur serait plus grand, on peut aller jusqu'à 800 ou 2000 micromètres. On peut descendre jusqu'à 200 micromètres s'il est plus petit. Le graphite apporte, en plus de sa bonne perméabilité aux rayonnements X, l'avantage d'être noir, c'est à dire d'absorber les rayonnements visibles émis dans sa direction par le scintillateur et qui contribuent plus à faire baisser le pouvoir de résolution du capteur qu'à augmenter sa sensibilité. Dans un exemple préféré, la qualité du graphite du socle 7 sera telle que la taille des grains, la longueur des lamelles, sera inférieure à 5 micromètres, de préférence de l'ordre de ou inférieur à 1 micromètre. On a remarqué en effet que, si l'anisotropie naturelle du graphite n'était pas contrôlée, elle conduisait à disposer de grains de 20 micromètres. Dans ce cas, la qualité de régularité de l'épaisseur de la dalle 6 en Csl était moins bonne, elle demandait plus de corrections logicielles.

Le socle 7 est de préférence recouvert, pour être densifié en surface, par une couche de carbone amorphe 8. La couche de carbone amorphe 8, dont l'épaisseur est de l'ordre de 3 à 20 micromètres, permet de combler des trous 9 présents à la surface du socle 7 du fait de sa porosité. Les atomes de la couche en carbone 8 se distinguent de ceux du socle 7 en ce que, dans la couche 7, la porosité est plus grande et les particules de carbone-graphite sont orientées. La couche 8 de carbone amorphe est une couche plus dense et non structurée c'est-à-dire qu'elle n'est pas polycristalline : les atomes y sont agrégés les uns sur les autres sans organisation. Cette couche de carbone amorphe est par exemple déposée en phase vapeur sous vide sur le socle 7.

En variante, ou en complément, la couche 7 en graphite peut subir préalablement, à l'endroit où devra croître la couche 6 d'iodure de césium, une densification par imprégnation. Une telle imprégnation est par exemple obtenue en recouvrant la face du socle 7 de graphite destinée à recevoir l'iodure de césium d'un film en une résine organique. On soumet ensuite cet ensemble à une très haute température (1000°). Cela a pour effet de casser la résine, de séparer dans la résine les atomes de carbone des atomes d'hydrogène ou autres corps auxquels ils sont liés. Ces impuretés sont ainsi naturellement évacuées par évaporation. La haute température a également pour effet de faire migrer par diffusion les atomes de carbone dans les espaces 11 de porosité du socle 7. Pour densifier encore plus la surface utile du socle 7, cette opération d'imprégnation peut être répétée plusieurs fois afin d'augmenter le caractère compact. Dans un exemple elle est effectuée quatre fois de suite.

Comme cela a été indiqué si dessus, il peut être décidé de ne pas préparer trop correctement la surface du graphite. On accepte dans ce cas de reporter l'essentiel de la correction des images obtenues sur un traitement logiciel consécutif à leur obtention. Dans l'invention de préférence, on provoque, en particulier après densification, une rectification de la surface de graphite avec un outil 12 de rectification. Typiquement, l'action de rectification enlève une petite épaisseur de 5 à 10 micromètres de la couche supérieure du socle 7 ou de la couche 8 le cas échéant. Le dépôt de la couche 8 peut avoir lieu avant ou après la rectification. Il en résulte une rugosité h de l'ordre de 0,2 à 0,4 micromètres, alors que sans rectification la rugosité naturelle H, notamment sans densification, peut atteindre 130 micromètres, en particulier si la taille des grains du graphite est de l'ordre de 20 micromètres.

Puis on fait croître le Csl en agissant d'une manière conventionnelle. On obtient alors des aiguillettes 12 dont la dimension de la section est de l'ordre de 3 à 6 micromètres de diamètre. Les sections des aiguillettes 12 peuvent être de différentes tailles comme cela apparaît sur la figure 1. Dans un exemple, les aiguillettes 12 sont séparées les unes des autres, aléatoirement, par un espace 13 valant entre 1 à 3 micromètres. Cet espace permet de constituer, avec les aiguillettes 12, une face 14 de changement de milieu. La présence de cette face 14 associée à l'indice de réfraction favorable du Csl conduit à un fonctionnement en fibre optique des aiguillettes 12. Autrement dit, les transformations de rayonnement, les scintillations qui se produisent dans une aiguillette 12, retentissent en un rayonnement 5 qui va être guidé. Si ce rayonnement est orienté à son émission vers le détecteur 2, il sort normalement des aiguillettes 12 par leur sommet 15. Par contre si ce rayonnement 5 est oblique, il se réfléchit, à l'intérieur des aiguillettes 12 sur la face 14 et finit par sortir par le sommet 15. La partie émise vers le socle est absorbée par le socle 7 noir. Dans un exemple, la couche 6 de Csl a une épaisseur comprise entre 100 à 300 micromètres. Typiquement, elle mesure 180 micromètres.

Puis la couche 6 est elle-même dopée au thallium d'une manière classique.

Enfin, la couche 6 de Csl dopé est recouverte d'une couche 16 de passivation. Par rapport à l'état de la technique dans lequel la couche 16 de passivation était un gel de silicone, s'agissant de l'oxysulfure de gadolinium, l'invention préconise de réaliser la couche de passivation 16 sous la forme d'une résine de synthèse polymérisée transparente. Cette résine polymérisée présentant l'avantage d'être plus étanche et d'empêcher les évaporations des poussières de Csl où de thallium, présente cependant l'inconvénient de ne pas conduire à une surface externe parfaitement lisse. Dans l'invention, on associe alors à la couche 16 de passivation une couche 17 de résine liquide de couplage optique avec le détecteur 2. De cette façon, on obtient une bonne étanchéité d'évaporation du thallium sans nuire au rendement du capteur.

La figure 2 montre une machine utilisable pour réaliser la couche 16 de passivation. Cette machine comporte trois cellules reliées ensemble. Dans une première cellule 18, le matériau pour réaliser la résine est introduit brut. Dans un exemple préféré ce matériau est du di-para-xylylène. Ce matériau est vaporisé dans la cellule 18 à une température de 175° sous une pression de un torr (un millimètre le mercure). La première cellule 18 est en relation avec une deuxième cellule 19 dans laquelle le matériau vaporisé est soumis à une pyrolyse. Par exemple la vapeur de di-para-xylylène est chauffée à 680° sous une pression de 0, 5 torr. Soumis à cette contrainte le di-para-xylylène se casse et se transforme en para-xylylène monomère. Le para-xylylène ainsi préparé est introduit à température ambiante et sous une très faible pression de 0,1 torr dans une troisième cellule 20 où il est diffusé en couche 16 sur les aiguillettes 12 de la couche 6. Le para-xylylène se recombine alors pour former un polymère poly-para-xylylène par condensation. Cette condensation conduit à réaliser des ponts au-dessus des espaces 13 de porosité de la couche de Csl sans pénétrer dans les intervalles.

Il est possible d'utiliser une résine de synthèse autre que la résine désignée ci-dessus. Celle-ci présente cependant l'avantage de bien adhérer au Csl d'une part et, d'autre part, de permettre la constitution des ponts au-dessus des espaces 13 sans venir combler ces espaces. De préférence, la résine utilisée devra avoir un indice de réfraction compris entre 1,78 et 1,45. De ce fait, cette résine ayant un indice inférieur à celui du Csl forme, à la liaison avec celui-ci, une couche antireflet. Dans un exemple la couche 16 a une épaisseur de 1 à 25 micromètres.

Sur la couche 16 de passivation on répand ensuite la couche 17 de résine liquide (et qui le reste) pour assurer un bon couplage optique. Cette résine a de préférence un indice de réfraction inférieur à 1,45. Elle est par exemple du type de celles utilisées dans la constitution des cellules à cristaux liquides. L'épaisseur de la couche 17 est du même ordre que celle de la couche 16.

Le détecteur 2 est ensuite fixé au socle 7 par des moyens mécaniques classiques.

## Revendications

1. Capteur électronique matriciel photosensible comportant un détecteur matriciel d'image (2) surmonté d'un scintillateur (3) pour transformer un rayonnement électromagnétique haute fréquence (4), typiquement un rayonnement X, en un rayonnement basse fréquence (5), typiquement un rayonnement du domaine visible, **caractérisé en ce que** le scintillateur comporte une dalle (6) en iodure de césium portée par un socle (7) en graphite disposé du côté qui est destiné à recevoir le rayonnement haute fréquence.

2. Capteur selon la revendication 1, **caractérisé en ce que** le socle du scintillateur est en graphite dont la taille des grains est inférieure à 5 micromètres, de préférence inférieure ou égale à 1 micromètre.

3. Capteur selon l'une des revendications 1 ou 2, **caractérisé en ce que** le socle est en graphite recouvert d'une couche (8) de carbone amorphe.

4. Capteur selon l'une des revendications 1 à 3, **caractérisé en ce que** le socle est en graphite imprégné par du carbone.

5. Capteur selon l'une des revendications 1 à 4, **caractérisé en ce que** la dalle du scintillateur est isolée d'un milieu ambiant par une couche (16) de passivation en une résine de synthèse, de préférence du type poly-para-xylylène, elle-même recouverte d'une couche de couplage optique liquide (17).

6. Capteur selon la revendication 5, **caractérisé en ce que** l'indice de réfraction de la résine de la couche de passivation est compris entre 1,78 et 1,45 pour former une couche antireflet.

7. Capteur selon l'une des revendications 1 à 6, **caractérisé en ce que**
- le socle de graphite a une épaisseur de 200 à 2000 micromètres, typiquement 500 à 800 micromètres,
- la dalle d'iodure de césium a une épaisseur de 100 à 300 micromètres, typiquement de 180 micromètres, et
- la couche de passivation en résine a une épaisseur de 1 à 25 micromètres.

8. Procédé de fabrication d'un capteur d'image matriciel, **caractérisé en ce que**
- on réalise un socle en graphite devant servir de support à un scintillateur,
- on rectifie le socle de graphite,
- on dépose en phase gazeuse de l'iodure de césium sur le socle en graphite,
- on dope le dépôt d'iodure de césium au thallium,
- on dépose en phase gazeuse sous vide une couche en une résine de synthèse sur le dépôt d'iodure de césium,
- on dépose une couche de résine de couplage optique liquide sur la couche en résine de synthèse,
- on plaque un détecteur contre la couche de résine de couplage optique liquide.

9. Procédé selon la revendication 8, **caractérisé en ce que**
- on traite la surface du graphite avant ou après rectification par dépôt d'une couche de carbone amorphe.

10. Procédé selon la revendication 8 ou la revendication 9, **caractérisé en ce qu'**on traite la surface du graphite avant rectification par imprégnation.

## Patentansprüche

1. Elektronischer Detektor mit lichtempfindlicher Matrix, umfassend einen Matrixbilddetektor (2), der über einem Szintillator (3) befestigt ist, um eine elektromagnetische Hochfrequenzstrahlung (4), typischerweise eine Röntgenstrahlung, in eine Niedrigfrequenzstrahlung (5), typischerweise eine Strahlung des sichtbaren Bereichs, umzuwandeln, **dadurch gekennzeichnet, dass** der Szintillator eine Platte (6) aus Cäsiumjodid umfasst, die von einem Sockel (7) aus Graphit getragen wird, der auf der Seite angeordnet ist, die dazu bestimmt ist, die Hochfrequenzstrahlung zu empfangen.

2. Detektor nach Anspruch 1, **dadurch gekennzeichnet, dass** der Sockel des Szintillators aus Graphit, dessen Korngröße geringer als 5 Mikrometer, vorzugsweise geringer oder gleich 1 Mikrometer, ist, besteht.

3. Detektor nach einem der Ansprüche 1 oder 2, **dadurch gekennzeichnet, dass** der Sockel aus mit einer Schicht (8) aus amorphem Kohlenstoff überzogenen Graphit besteht.

4. Detektor nach einem der Ansprüche 1 bis 3, **dadurch gekennzeichnet, dass** der Sockel aus einem mit Kohlenstoff imprägnierten Graphit besteht.

5. Detektor nach einem der Ansprüche 1 bis 4, **dadurch gekennzeichnet, dass** die Platte des Szintillators von einem umgebenden Medium durch eine Passivierungsschicht (16) aus einem Syntheseharz, vorzugsweise vom Typ Polyparaxylylen, isoliert ist, die ihrerseits mit einer flüssigen Schicht (17) zur optischen Kopplung überzogen ist.

6. Detektor nach Anspruch 5, **dadurch gekennzeichnet, dass** der Brechungsindex des Harzes der Passivierungsschicht zwischen 1,78 und 1,45 liegt, um eine Antireflexschicht zu bilden.

7. Detektor nach einem der Ansprüche 1 bis 6, **dadurch gekennzeichnet, dass**
- der Graphitsockel eine Dicke von 200 bis 2000 Mikrometer, typischerweise 500 bis 800 Mikrometer, hat,
- die Platte aus Cäsiumjodid eine Dicke von 100 bis 300 Mikrometer, typischerweise 180 Mikrometer, hat,
- die Passivierungsschicht aus Harz eine Dicke von 1 bis 25 Mikrometer hat.

8. Verfahren zur Herstellung eines Matrixbilddetektors, **dadurch gekennzeichnet, dass**
- ein Sockel aus Graphit hergestellt wird, der als Stütze für einen Szintillator dienen soll,
- der Graphitsockel geschliffen wird,
- in gasförmiger Phase Cäsiumjodid auf den Graphitsockel aufgebracht wird,
- das aufgebrachte Cäsiumjodid mit Thallium dotiert wird,
- in gasförmiger Phase unter Vakuum eine Schicht aus einem Syntheseharz auf das aufgebrachte Cäsiumjodid aufgebracht wird,
- eine flüssige Harzschicht zur optischen Kopplung auf die Schicht aus Syntheseharz aufgebracht wird,
- ein Detektor auf der flüssigen Harzschicht zur optischen Kopplung angeordnet wird.

9. Verfahren nach Anspruch 8, **dadurch gekennzeichnet, dass**
- die Oberfläche des Graphits vor oder nach dem Schleifen durch Aufbringen einer Schicht aus amorphem Kohlenstoff behandelt wird.

10. Verfahren nach Anspruch 8 oder Anspruch 9, **dadurch gekennzeichnet, dass** die Oberfläche des Graphits vor dem Schleifen durch Imprägnieren behandelt wird.

## Claims

1. Photosensitive matrix electronic sensor comprising a matrix image detector (2) surmounted by a scintillator (3) for transforming high-frequency electromagnetic radiation (4), typically X-ray radiation, into low-frequency radiation (5), typically radiation in the visible domain, **characterized in that** the scintillator comprises a caesium iodide faceplate (6) carried by a graphite base (7) disposed on the side which is intended to receive the high-frequency radiation.

2. Sensor according to Claim 1, **characterized in that** the base of the scintillator is made of graphite whose grain size is less than 5 micrometres, preferably less than or equal to 1 micrometre.

3. Sensor according to either of Claims 1 and 2, **characterized in that** the base is made of graphite covered with a layer (8) of amorphous carbon.

4. Sensor according to one of Claims 1 to 3, **characterized in that** the base is made of graphite impregnated with carbon.

5. Sensor according to one of Claims 1 to 4, **characterized in that** the faceplate of the scintillator is insulated from an ambient medium by a passivation layer (16) made of a synthetic resin, preferably of the polyparaxylylene type, itself covered with a liquid optical coupling layer (17).

6. Sensor according to Claim 5, **characterized in that** the refractive index of the resin of the passivation layer lies between 1.78 and 1.45 so as to form an antireflection layer.

7. Sensor according to one of Claims 1 to 6, **characterized in that**
- the graphite base has a thickness of 200 to 2000 micrometres, typically 500 to 800 micrometres,
- the caesium iodide faceplate has a thickness of 100 to 300 micrometres, typically 180 micrometres, and
- the resin passivation layer has a thickness of 1 to 25 micrometres.

8. Process for fabricating a matrix image sensor, **characterized in that**
- a graphite base is made, this base having to serve as support for a scintillator,
- the graphite base is ground,
- caesium iodide is deposited in the gaseous phase on the graphite base,
- the caesium iodide deposition is doped with thallium,
- a layer made of a synthetic resin is deposited under vacuum in the gaseous phase on the caesium iodide deposition,
- a layer of liquid optical coupling resin is deposited on the synthetic resin layer,
- a detector is applied flat against the liquid optical coupling resin layer.

9. Process according to Claim 8, **characterized in that**
- the surface of the graphite is treated before or after grinding by depositing a layer of amorphous carbon.

10. Process according to Claim 8 or Claim 9, **characterized in that** the surface of the graphite is treated before grinding by impregnation.
